(19) **Europäisches Patentamt European Patent Office Office européen des brevets**

(11)  **EP 4 613 726 A1**

(12)  **EUROPEAN PATENT APPLICATION**

(43) Date of publication:
**10.09.2025 Bulletin 2025/37**

(21) Application number: **24161496.5**

(22) Date of filing: **05.03.2024**

(51) International Patent Classification (IPC):
***C05C 3/00*** *(2006.01)*

(52) Cooperative Patent Classification (CPC):
(C-Sets available)
**C05C 3/00**                                            (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Sabic Agri-Nutrients Company**
**31961 Jubail (SA)**

(72) Inventors:
- **MAMEDOV, Aghaddin**
  **Sugar Land, 77478 (US)**
- **AL-RABHI, Mohamed**
  **Sugar Land, 77478 (US)**

(74) Representative: **J A Kemp LLP**
**80 Turnmill Street**
**London EC1M 5QU (GB)**

Remarks:
Amended claims in accordance with Rule 137(2) EPC.

(54)  **PRODUCTION OF NITROGEN, POTASSIUM, SULFUR NUTRIENT THROUGH DE-CARBONIZATION AND UTILIZATION OF CALCIUM SULFATE**

(57)     Disclosed are methods and systems for capturing carbon dioxide and utilizing calcium sulfate to generate useful products.

**Figure**

EP 4 613 726 A1

**(Cont. next page)**

(52) Cooperative Patent Classification (CPC): (Cont.)

C-Sets
**C05C 3/00, C05C 9/00, C05D 1/02, C05D 9/02**

**Description**

**BACKGROUND OF THE INVENTION**

**I. Field of the Disclosure**

This disclosure generally concerns methods utilizing carbon dioxide and phosphogypsum for generating fertilizers.

**II. Background**

Over the past decade, the world has become more conscious of the adverse effects on the environment posed by disposing processing industries, such as waste gypsums like phosphogypsum (PG) or red gypsum (RG). Waste gypsums have been disposed by stacking on land or discharge to the sea. However, both methods of disposal have possible adverse environmental effects.

Further, reduction of $CO_2$ emission is presently among the top priorities of many industries. Chemical utilization of $CO_2$ through its reduction to CO and involvement of chemical reactions requires excessive consumption of energy. That is one of the reasons why, presently, many chemical companies have made significant efforts to reduce $CO_2$ emission by storing $CO_2$ in underground deep storage.

There is a need for additional ways to reduce $CO_2$ as well as reduce waste gypsums.

**SUMMARY OF THE INVENTION**

A solution to at least some of the problems discussed above, including an efficient utilization of industrial by-products such as a gypsum and carbon dioxide have been discovered. In one aspect, the solution resides in reacting calcium sulfate ($CaSO_4$), carbon dioxide ($CO_2$), urea, a source of ammonia, such as one or both of ammonia ($NH_3$) and ammonium hydroxide ($NH_4OH$), and a source of potassium to produce a fertilizer comprising urea ammonium sulfate (($NH_4)_2SO_4.CO(NH_2)_2$), potassium sulfate ($K_2SO_4$), and/or calcium carbonate ($CaCO_3$). These reactions can be performed in one reaction vessel or these reactions that occur can be divided. Non-limiting example reactions (1) and (2) are shown below. The compositions, systems, and method herein provide the benefit of utilizing both carbon dioxide, including from industrial exhaust sources, and gypsum, including from by-product and recycled sources. This can result in decreasing carbon dioxide release into the atmosphere while producing useful products. The carbon dioxide and gypsum utilization may concern the generation of a first product, such as calcium carbonate ($CaCO_3$), urea ammonium sulfate (($NH_4)_2SO_4.CO(NH_2)_2$), and/or potassium sulfate ($K_2SO_4$). When other sources of potassium or ammonia are used, different or additional products can be produced, such as hydrochloric acid (HCl), carbonic acid ($H_2CO_3$), phosphoric acid ($H_3PO_4$), and/or nitric acid ($HNO_3$), such as when the potassium source is KCl, $K_2CO_3$, $K_3PO_4$, and/or $KNO_3$, respectively.

$$(1) \qquad 2CaSO_4.2H_2O + 2CO_2 + 2NH_3 + 2KOH \rightarrow 2CaCO_3 + (NH_4)_2SO_4 + K_2SO_4 + 2H_2O$$

$$(2) \qquad (NH_4)_2SO_4 + NH_2CONH_2 \rightarrow (NH_4)_2SO_4.CO(NH_2)_2$$

In some instances, the reaction of calcium sulfate ($CaSO_4$), carbon dioxide ($CO_2$), a source of ammonia, and a source of potassium comprise two, three, or more reactions that occur in the same reaction vessel or separate vessels. As a non-limiting example, the reaction of calcium sulfate ($CaSO_4$), carbon dioxide ($CO_2$), a source of ammonia, and a source of potassium are three reactions, such as the non-limiting example reactions (3), (4), and (5).

$$(3) \qquad CaSO_4.2H_2O + CO_2 + 2NH_3 \rightarrow CaCO_3 + (NH_4)_2SO_4 + H_2O$$

$$(4) \qquad CaSO_4 + 2KOH \rightarrow Ca(OH)_2 + K_2SO_4$$

$$(5) \qquad Ca(OH)_2 + CO_2 \rightarrow CaCO_3 + H_2O$$

Certain aspects concern a final product that contains a mixture comprising, consisting essentially of, or consisting of any of the above chemicals. Embodiments of the disclosure are improvements to known methods of generating fertilizers, including fertilizer comprising, consisting essentially of, or consisting of urea ammonium sulfate ($NH_4)_2SO_4.CO(NH_2)_2$ and potassium sulfate $K_2SO_4$, including by involving the use of $CO_2$ and/or gypsum, such as phosphogypsum

Certain embodiments provide utilization (such as by recycling) of high amounts of $CO_2$ for synthesis of a complex nutrient,

such as $(NH_4)_2SO_4.CO(NH_2)_2/K_2SO_4$.

Certain aspects are directed to a method of capturing $CO_2$ and using calcium sulfate ($CaSO_4$) to prepare a nitrogen (N), potassium (K), sulfur (S) fertilizer comprising urea ammonium sulfate $(NH_4)_2SO_4.CO(NH_2)_2$ and potassium sulfate ($K_2SO_4$). In some instances, the method comprising producing calcium carbonate ($CaCO_3$), ammonium sulfate $((NH_4)_2SO_4)$, and potassium sulfate ($K_2SO_4$) by contacting calcium sulfate ($CaSO_4$) with carbon dioxide ($CO_2$), a source of potassium, and a source of ammonia. In some instances, the method may include producing urea ammonium sulfate $(NH_4)_2SO_4.CO(NH_2)_2$ by contacting the ammonium sulfate $((NH_4)_2SO_4)$ with urea.

In certain aspects the method can include steps (a), (b), and/or (c). Step (a) may include contacting calcium sulfate ($CaSO_4$) with carbon dioxide ($CO_2$), a source of potassium, and a source of ammonia, to generate a first product comprising calcium carbonate ($CaCO_3$), ammonium sulfate $((NH_4)_2SO_4)$, and potassium sulfate ($K_2SO_4$). Step (b) may include separating the calcium carbonate ($CaCO_3$) from the first product to generate a second product comprising a solution or gel comprising ammonium sulfate $((NH_4)_2SO_4)$ and potassium sulfate ($K_2SO_4$). Step (c) may include contacting the second product with urea to generate the fertilizer comprising urea ammonium sulfate $(NH_4)_2SO_4.CO(NH_2)_2$ and potassium sulfate ($K_2SO_4$).

In some aspects, the source of $CaSO_4$ in step (a) comprises waste gypsum and/or recycled gypsum. In certain aspects, the source of $CO_2$ in step (a) comprises exhaust gas from an industrial plant and/or flue gas. In some aspects, the source of $CaSO_4$ in step (a) comprises phosphogypsum and/or red gypsum. In some aspects, the source of ammonia is a solution of ammonium hydroxide, ammonium, ammonium carbonate, ammonia gas, succinimide, and/or phthalimide. In some aspects, the source of potassium is potassium hydroxide (KOH), potassium chloride (KCl), potassium carbonate ($K_2CO_3$), potassium phosphate ($K_3PO_4$), and/or potassium nitrate ($KNO_3$). In some aspects, the source of urea comprises urea solution, molten urea, and/or granular/prilled urea. In some aspects, step (a) occurs at approximately 35°C to 70°C, such as at, greater than, less than, or between any one of 35, 40, 45, 50, 55, 60, 65, or 70°C. In some aspects, step (b) occurs at approximately 35°C to 70°C, such as at, greater than, less than, or between any one of 35, 40, 45, 50, 55, 60, 65, or 70°C. In some aspects, step (c) occurs at approximately 35°C to 70°C, such as at, greater than, less than, or between any one of 35, 40, 45, 50, 55, 60, 65, or 70°C. In some aspects, $CaCO_3$ is separated before all of the ingredients of step (a) are formed, such as before $Ca(OH)_2$ and/or $K_2SO_4$ is formed. In some aspects, the method includes step (d). In step (d), the separated $CaCO_3$ is combined with a plant nutrient to form a fertilizer. In some aspects, the separated $CaCO_3$ is dried.

In some aspects, the method includes contacting calcium sulfate ($CaSO_4$) and urea ($CO(NH_2)_2$) with carbon dioxide ($CO_2$), a source of potassium, and a source of ammonia to generate calcium carbonate ($CaCO_3$), potassium sulfate ($K_2SO_4$), and urea ammonium sulfate $(NH_4)_2SO_4.CO(NH_2)_2$. In some aspects, the method further includes separating $CaCO_3$ from the potassium sulfate ($K_2SO_4$) and urea ammonium sulfate $(NH_4)_2SO_4.CO(NH_2)_2$ and optionally drying the separated $CaCO_3$.

Certain aspects of the method include recycling a portion of the urea ammonium sulfate and/or potassium sulfate back to a container where the contacting occurs between calcium sulfate ($CaSO_4$) and urea ($CO(NH_2)_2$) with carbon dioxide ($CO_2$), a source of potassium, and a source of ammonia.

In some aspects, the fertilizer further includes water, calcium sulfate ($CaSO_4$), ammonia ($NH_3$), ammonium hydroxide ($NH_4OH$), potassium hydroxide (KOH), urea ($CO(NH_2)_2$), ammonium sulfate $((NH_4)_2SO_4)$, and/or calcium carbonate ($CaCO_3$).

Certain aspects are directed to a system for capturing $CO_2$ and using calcium sulfate ($CaSO_4$) to prepare a nitrogen (N), potassium (K), sulfur (S) fertilizer comprising urea ammonium sulfate $(NH_4)_2SO_4.CO(NH_2)_2$ and potassium sulfate ($K_2SO_4$). In some aspects, the system contains one or a combination of reactor(s) capable of receiving one or more of calcium sulfate ($CaSO_4$), urea ($CO(NH_2)_2$), $CO_2$, a source of potassium, and a source of ammonia, such as one or both of ammonia ($NH_3$) and ammonium hydroxide ($NH_4OH$). In some aspects, the system comprises one or a combination of reactor(s) capable of providing conditions to generate a product comprising calcium carbonate ($CaCO_3$), potassium sulfate ($K_2SO_4$), and urea ammonium sulfate $(NH_4)_2SO_4.CO(NH_2)_2$. In some aspects, the system further comprising an apparatus capable of separating $CaCO_3$ from the product generated in the one or the combination of reactor(s). In some aspects, the system comprises or consists of elements (a), (b), and/or (c). Element (a) can comprise a first reactor capable of receiving $CaSO_4$, $CO_2$, an ammonia source, and a potassium source and providing conditions to generate a first product comprising $CaCO_3$, $K_2SO_4$, and $(NH_4)_2SO_4$. Element (b) can comprise an apparatus capable of separating $CaCO_3$ from the first product generated in the first reactor to generate a second product comprising a solution or gel comprising ammonium sulfate $((NH_4)_2SO_4)$, and potassium sulfate ($K_2SO_4$). Element (c) can comprise one or a combination of reactor(s) capable of receiving the second product and contacting with urea to generate a fertilizer containing urea ammonium sulfate $(NH_4)_2SO_4.CO(NH_2)_2$ and potassium sulfate ($K_2SO_4$).

In some aspects, the system comprises elements (a) and (c) and not (b). In some aspects, the system comprises elements (a), (b), and (c). In some aspects, the first and second reactor are the same reactor. In other aspects, the first and second reactor are different reactors. In some instances, the first reactor is two or three separate reactors. In some embodiments, the system comprises an apparatus connecting the first reactor and the second reactor. In some aspects, the system comprises a further reactor capable of receiving $H_2SO_4$ and calcium phosphate ($Ca_3(PO_4)_2$) and providing

conditions to generate $CaSO_4$ and phosphoric acid ($H_3PO_4$). The first, second, third, and/or further reactors may be the same reactor or, in some aspects, may be different reactors. In some aspects, the first and further reactors are the same reactor. In some aspects, the second and third reactors are the same reactor. In some aspects, the first reactor is capable of receiving and reacting $CO_2$ from a flue gas and/or a waste gas from an industrial plant. In some aspects, the first reactor is capable of receiving and reacting $CO_2$ from a flue gas and/or a waste gas from an industrial plant, wherein the $CO_2$ from the flue gas and/or waste gas is not purified to separate or concentrate the $CO_2$ in the flue gas and/or waste gas before reacting to form the $CaCO_3$.

In some aspects, a fertilizer product contains urea ammonium sulfate $(NH_4)_2SO_4.CO(NH_2)_2$ and potassium sulfate ($K_2SO_4$). In some aspects, the fertilizer product further comprises one or more of water, calcium sulfate ($CaSO_4$), ammonia ($NH_3$), ammonium hydroxide ($NH_4OH$), potassium hydroxide ($KOH$), urea ($CO(NH_2)_2$), ammonium sulfate ($(NH_4)_2SO_4$) and/or calcium carbonate ($CaCO_3$). In some aspects, urea ammonium sulfate $(NH_4)_2SO_4.CO(NH_2)_2$ encapsulates at least a portion of the potassium sulfate ($K_2SO_4$) in the fertilizer product. In some aspects, a method of fertilizing includes contacting a soil, a plant or a soil and plant with the fertilizer or product described herein or produced by the methods described herein.

Also disclosed are the following Aspects 1 to 15 of the present invention.

Aspect 1 is a method of capturing $CO_2$ and using calcium sulfate ($CaSO_4$) to prepare a nitrogen (N), potassium (K), sulfur (S) fertilizer comprising urea ammonium sulfate $(NH_4)_2SO_4.CO(NH_2)_2$ and potassium sulfate ($K_2SO_4$), the method comprising producing calcium carbonate ($CaCO_3$), ammonium sulfate ($(NH_4)_2SO_4$), and potassium sulfate ($K_2SO_4$) by contacting calcium sulfate ($CaSO_4$) with carbon dioxide ($CO_2$), a source of potassium, and a source of ammonia, and producing urea ammonium sulfate $(NH_4)_2SO_4.CO(NH_2)_2$ by contacting the ammonium sulfate ($(NH_4)_2SO_4$) with urea.

Aspect 2 is the method of aspect 1, comprising the steps of:

(a) contacting calcium sulfate ($CaSO_4$) with carbon dioxide ($CO_2$), a source of potassium, and a source of ammonia, to generate a first product comprising calcium carbonate ($CaCO_3$), ammonium sulfate ($(NH_4)_2SO_4$), and potassium sulfate ($K_2SO_4$);
(b) separating the calcium carbonate ($CaCO_3$) from the first product to generate a second product comprising a solution or gel comprising ammonium sulfate ($(NH_4)_2SO_4$), and potassium sulfate ($K_2SO_4$); and
(c) contacting the second product solution or gel with urea to generate the fertilizer comprising urea ammonium sulfate $(NH_4)_2SO_4.CO(NH_2)_2$ and potassium sulfate ($K_2SO_4$).

Aspect 3 is the method of aspect 1 comprising contacting calcium sulfate ($CaSO_4$) and urea ($CO(NH_2)_2$) with carbon dioxide ($CO_2$), a source of potassium, and a source of ammonia to generate calcium carbonate ($CaCO_3$), potassium sulfate ($K_2SO_4$), and urea ammonium sulfate $(NH_4)_2SO_4.CO(NH_2)_2$.

Aspect 4 is the method of aspect 3, further comprising separating $CaCO_3$ from the potassium sulfate ($K_2SO_4$) and urea ammonium sulfate $(NH_4)_2SO_4.CO(NH_2)_2$ and optionally drying the separated $CaCO_3$.

Aspect 5 is the method of any one of aspects 1 to 4, comprising recycling a portion of the urea ammonium sulfate and potassium sulfate back to a container wherein occurs the contacting calcium sulfate ($CaSO_4$) and urea ($CO(NH_2)_2$) with carbon dioxide ($CO_2$), a source of potassium, and a source of ammonia.

Aspect 6 is the method of any one of aspects 1 to 5, wherein:

the $CaSO_4$ is waste gypsum and/or recycled gypsum, preferably wherein the $CaSO_4$ is phosphogypsum and/or red gypsum;
the source of ammonia is one or both of ammonia ($NH_3$) and ammonium hydroxide ($NH_4OH$);
the source of $CO_2$ comprises waste gas from an industrial plant and/or flue gas;
the source of potassium comprises potassium hydroxide ($KOH$), potassium chloride ($KCl$), potassium carbonate ($K_2CO_3$), potassium phosphate ($K_3PO_4$), and/or potassium nitrate ($KNO_3$): and/or
the source of urea comprises urea solution, molten urea, and/or granular/prilled urea.

Aspect 7 is the method of any one of aspects 1 to 6, wherein the fertilizer further comprises water, calcium sulfate ($CaSO_4$), ammonia ($NH_3$), ammonium hydroxide ($NH_4OH$), potassium hydroxide ($KOH$), urea ($CO(NH_2)_2$), ammonium sulfate ($(NH_4)_2SO_4$), and/or calcium carbonate ($CaCO_3$).

Aspect 8 is the method of any one of aspects 1 to 7, wherein:

contacting calcium sulfate ($CaSO_4$) with carbon dioxide ($CO_2$), a source of potassium, and a source of ammonia occurs at approximately 30°C to 65°C;
wherein contacting the ammonium sulfate ($(NH_4)_2SO_4$) with urea or the second product solution or gel with urea occurs at approximately 30°C to 65°C; and/or

wherein contacting calcium sulfate ($CaSO_4$) and urea ($CO(NH_2)_2$) with carbon dioxide ($CO_2$), a source of potassium, and a source of ammonia occurs at approximately 30°C to 65°C.

Aspect 9 is a system for capturing $CO_2$ and using calcium sulfate ($CaSO_4$) to prepare a nitrogen (N), potassium (K), sulfur (S) fertilizer comprising urea ammonium sulfate ($(NH_4)_2SO_4.CO(NH_2)_2$) and potassium sulfate ($K_2SO_4$), the system comprising one or a combination of reactor(s) capable of receiving one or more of calcium sulfate ($CaSO_4$), urea ($CO(NH_2)_2$), $CO_2$, a source of potassium, and one or both of ammonia ($NH_3$) and ammonium hydroxide ($NH_4OH$), wherein the one or combination of reactor(s) are capable of providing conditions to generate a product comprising calcium carbonate ($CaCO_3$), potassium sulfate ($K_2SO_4$), and urea ammonium sulfate ($(NH_4)_2SO_4.CO(NH_2)_2$.

Aspect 10 is the system of aspect 9, further comprising an apparatus capable of separating $CaCO_3$ from the product generated in the one or a combination of reactor(s).

Aspect 11 is the system of any one of aspects 9 to 10, wherein:

the one or a combination of reactor(s) is capable of receiving and reacting $CO_2$ from a flue gas and/or a waste gas from an industrial plant and/or

the one or a combination of reactor(s) is capable of receiving and reacting $CO_2$ from a flue gas and/or a waste gas from an industrial plant, wherein the $CO_2$ from the flue gas and/or

waste gas is not purified to separate or concentrate the $CO_2$ in the flue gas and/or waste gas before reacting to form the calcium carbonate ($CaCO_3$).

Aspect 12 is a fertilizer product comprising urea ammonium sulfate ($(NH_4)_2SO_4.CO(NH_2)_2$ and potassium sulfate ($K_2SO_4$).

Aspect 13 is the fertilizer product of aspect 12, further comprising one or more of water, calcium sulfate ($CaSO_4$), ammonia ($NH_3$), ammonium hydroxide ($NH_4OH$), potassium hydroxide (KOH), urea ($CO(NH_2)_2$), ammonium sulfate (($NH_4)_2SO_4$) and/or calcium carbonate ($CaCO_3$).

Aspect 14 is the fertilizer product of aspect 12, wherein the urea ammonium sulfate ($(NH_4)_2SO_4.CO(NH_2)_2$ encapsulates at least a portion of the potassium sulfate ($K_2SO_4$).

Aspect 15 is a method of fertilizing, the method comprising contacting a soil, a plant or a soil and plant with the fertilizer of any one of aspects 12 to 14 or produced by the method of any one of aspects 1 to 8 or the system of claims 9 to 11.

The term "fertilizer" is defined as a material applied to soils or to plant tissues to supply one or more plant nutrients essential or beneficial to the growth of plants and/or stimulants or enhancers to increase or enhance plant growth.

The term "granule" can include a solid material. A granule can have a variety of different shapes, non-limiting examples of which include a spherical, a puck, an oval, a rod, an oblong, or a random shape.

The term "particle" can include a solid material less than a millimeter in its largest dimension.

The terms "particulate" or "powder" can include a plurality of particles.

The terms "about" or "approximately" as used herein are defined as being close to as understood by one of ordinary skill in the art. In one non-limiting embodiment, the terms are defined to be within 10%, preferably within 5%, more preferably within 1%, and most preferably within 0.5%.

The terms "wt. %," "vol.%," or "mol.%" refers to a weight, volume, or molar percentage of a component, respectively, based on the total weight, the total volume of material, or total moles, that includes the component. In a non-limiting example, 10 grams of component in 100 grams of the material is 10 wt. % of component.

The use of the word "a" or "an" when used in conjunction with the term "comprising" may mean "one," but it is also consistent with the meaning of "one or more," "at least one," and "one or more than one."

The phrase "and/or" means "and" or "or". To illustrate, A, B, and/or C includes: A alone, B alone, C alone, a combination of A and B, a combination of A and C, a combination of B and C, or a combination of A, B, and C. In other words, "and/or" operates as an inclusive or.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The compositions and methods for their use can "comprise," "consist essentially of," or "consist of" any of the ingredients or steps disclosed throughout the specification. Compositions and methods "consisting essentially of" any of the ingredients or steps disclosed limits the scope of the claim to the specified materials or steps which do not materially affect the basic and novel characteristic of the claimed invention.

It is contemplated that any embodiment discussed in this specification can be implemented with respect to any method or composition of the invention, and vice versa. Furthermore, compositions of the invention can be used to achieve methods of the invention.

Other objects, features and advantages of the present invention will become apparent from the following detailed description. It should be understood, however, that the detailed description and the specific examples, while indicating specific embodiments of the invention, are given by way of illustration only, since various changes and modifications within the spirit and scope of the invention will become apparent to those skilled in the art from this detailed description.

## BRIEF DESCRIPTION OF THE DRAWINGS

The following drawings form part of the present specification and are included to further demonstrate certain aspects of the present invention. The invention may be better understood by reference to one or more of these drawings in combination with the detailed description of specific embodiments presented herein.

Figure: a schematic of a system and method for capturing $CO_2$ and using calcium sulfate according to a non-limiting example of a system and method disclosed herein.

## DETAILED DESCRIPTION OF THE INVENTION

Certain aspects of the present disclosure provide benefits over existing carbon dioxide capture techniques, including by an efficient utilization of gypsum, such as a waste gypsum. In one aspect, the solution resides in reacting calcium sulfate ($CaSO_4$) with carbon dioxide ($CO_2$), urea, a source of ammonia, and a source of potassium. In some instances, the reaction produces urea ammonium sulfate, potassium sulfate, and/or calcium carbonate. This reaction scheme provides the benefit of utilizing both carbon dioxide, including from industrial vent sources, and gypsum, including from by-product and recycled sources, such as phosphogypsum. This can result in decreasing carbon dioxide release into the atmosphere. The carbon dioxide and gypsum utilization may concern the generation of a fertilizer such as urea ammonium sulfate $(NH_4)_2SO_4.CO(NH_2)_2$, or potassium sulfate ($K_2SO_4$) and/or calcium carbonate ($CaCO_3$) that can be used together or separated and used in production of additional fertilizers. When other sources of potassium or ammonia are used, different or additional products can be produced, such as hydrochloric acid (HCl), carbonic acid ($H_2CO_3$), phosphoric acid ($H_3PO_4$), and/or nitric acid ($HNO_3$). Further, certain aspects do not include production of and/or inclusion of calcium phosphate urea, urea phosphate, and/or urea calcium sulfate.

## I. Fertilizer

Certain embodiments herein concern a fertilizer comprising urea ammonium sulfate $(NH_4)_2SO_4.CO(NH_2)_2$ and/or potassium sulfate ($K_2SO_4$). Certain aspects involve synthesis of the nutrient complex using natural sources of ingredients of the fertilizer, such as $CaSO_4$ and $CO_2$. In addition to these feed sources, a source of nitrogen, a source of ammonia, and a source of potassium also are used, in some embodiments.

The fertilizer, which may be a fertilizer granule, can contain urea ammonium sulfate $(NH_4)_2SO_4.CO(NH_2)_2$ and potassium sulfate ($K_2SO_4$). In some aspects, urea ammonium sulfate encapsulates at least a portion of the potassium sulfate. The ratio of these elements present in the fertilizer may be tailored to specific applications. In some embodiments, at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. % of the based on the total weight of the fertilizer is urea ammonium sulfate $(NH_4)_2SO_4.CO(NH_2)_2$ and/or potassium sulfate ($K_2SO_4$).

In some aspects, the fertilizer comprises nitrogen (N), potassium (K), sulfur (S), carbon (C), and/or calcium (Ca). In some instances, (i) The N content of the fertilizer can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, ii) the K content of the fertilizer can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, iii) the S content of the fertilizer can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, iv) the C content of the fertilizer can be at least any one of, at most any one of, equal to any one of, or between any two of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, based on the total weight of the fertilizer, v) The Ca content of the fertilizer can be at least any one of, at most any one of, equal to any one of, or between any two of 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 99.5, and 100 wt. %, based on the total weight of the fertilizer.

The N, K, S, C, and/or Ca can be present as and/or sourced as a water soluble compound(s) or a water insoluble compound(s). In some instances, the N, K, S, C, and/or Ca can be present as salts. In some aspects, the N, P, K, S, C, and/or Ca can be present as a water soluble salt(s). The N, K, S, C, and/or Ca salt(s) can be in a non-hydrate and/or one or more hydrate form.

Moisture content of the dried fertilizer can be less than 1 wt. %, such as 0.1 wt. % to 0.9 wt. %, or any one of or between any two of 0.1, 0.2, 0.3, 0.4, 0.5, 0.6, 0.7, 0.8, 0.9, or 1 wt. %, or any range thereof, based on the weight of the fertilizer, such as a fertilizer granule. As a non-limiting example, the moisture content can be measured by drying the sample at 50°C, for 25 min and measuring the amount of mass lost by the fertilizer after being dried.

In some particular aspects, the $CaSO_4$ can contain and/or can be obtained from phosphogypsum and/or red gypsum.

The fertilizer can be of any suitable shape. Non-limiting shapes include spherical, cuboidal, cylindrical, puck shape, oval, and oblong shapes. In some aspects, the fertilizer can be of cylindrical shape with a circular, elliptical, ovular, triangular, square, rectangular, pentagonal, or hexagonal cross section, although a cylindrical shaped core having a cross-section of other shapes can also be made. In some aspects, the fertilizer at its widest dimension can be 0.5 mm to 6 mm, or 0.5 mm to 5 mm, preferably 1 mm to 4 mm, or at least any one of, at most any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm. In some particular aspects, the fertilizer can have a substantially spherical shape with an average diameter 0.5 mm to 6 mm, or 0.5 mm to 5 mm, preferably 1 mm to 4 mm, or at least any one of, at most any one of, equal to any one of, or between any two of 0.5 mm, 1 mm, 1.5 mm, 2 mm, 2.5 mm, 3 mm, 3.5 mm, 4 mm, 4.5 mm, 5 mm, 5.5 mm, and 6 mm.

The fertilizer can be water and/or soil dispersible. In some aspects, a fertilizer, such as a fertilizer granule having a size of 2 mm to 4 mm prior to adding to water, can disintegrate into particles having sizes less than 1 mm, less than 0.9 mm, less than 0.8 mm, less than 0.7 mm, less than 0.6 mm, less than 0.5 mm, less than 0.4 mm, or less than 0.3 mm, within 1 minute of adding the fertilizer to water at a pH 7, under stirring at a rate 90 rpm to 110 rpm, at an ambient temperature.

The fertilizer can have a compositional make-up that is substantially homogeneous. In some instances, a compositional make-up for a 1 mm × 1 mm × 1 mm cube at any position of the mixture can be similar (within ± 20 %, or ± 10 %, or ± 5 %, or ± 3 %, ± 2 %, or ± 1 %, or ± 0.5 %) to that of a 1 mm × 1 mm × 1 mm cube at any other position of the mixture. In some instances, the urea ammonium sulfate $(NH_4)_2SO_4.CO(NH_2)_2$ encapsulates, coats, or is coated by another ingredient and/or fertilizer, such as potassium sulfate $(K_2SO_4)$. As a non-limiting example, urea ammonium sulfate $(NH_4)_2SO_4.CO(NH_2)$ may encapsulate $K_2SO_4$. In some instances, the fertilizer further contains water, calcium sulfate $(CaSO_4)$, ammonia $(NH_3)$, ammonium hydroxide $(NH_4OH)$, potassium hydroxide $(KOH)$, urea $(CO(NH_2)_2)$, ammonium sulfate $((NH_4)_2SO_4)$, and/or calcium carbonate $(CaCO_3)$.

In some aspects, the product of the reactions and/or the starting materials of the reactions can be adjusted to fit the needs of a consumer, a plant, a soil, a water, or a combination thereof. As a non-limiting example, a nitrogen, potassium, sulfur, calcium fertilizer (NK+SCa) grade can be about 14:0:7+14:6, with phosphorous at or about 0 as indicated in the N:P:K+S:Ca ratio. As a non-limiting example, a nitrogen, potassium, sulfur fertilizer (NK+S) grade can be about 19:0: 12+20, with phosphorous at or about 0 as indicated in the N:P:K+S ratio .

In some aspects, additional fertilizer substances can be included or excluded in the fertilizer. If included, additional fertilizers can be chosen based on the particular needs of certain types of soil, climate, or other growing conditions to maximize the efficacy of the fertilizer in enhancing plant growth and crop yield. Additional additives may also be included or excluded in the fertilizer. Non-limiting examples of additives that can be included or excluded from the fertilizer of the present invention include additional nitrogen nutrients, phosphorus nutrients, potassium nutrients, additional micronutrients, and/or additional secondary nutrients. The micronutrient can be copper, iron, chloride, manganese, molybdenum, or nickel, or any combinations thereof. The nitrogen nutrient can be urea, ammonium nitrate, ammonium sulfate, diammonium phosphate, monoammonium phosphate, urea-formaldehyde, ammonium chloride, and potassium nitrate. In some aspects, the additional secondary nutrients may include lime and/or superphosphate. In some instances, the additional fertilizer substances and/or the additional additives are contained in an optional coating at least partially covering the fertilizer.

In some instances, the inhibitors include nitrification inhibitors and/or urease inhibitors. Suitable nitrification inhibitors include, but are not limited to, 3,4-dimethylpyrazole phosphate (DMPP), dicyandiamide (DCD), thiourea (TU), 2-chloro-6-(trichloromethyl)-pyridine (Nitrapyrin), 5-ethoxy-3-trichloromethyl-1,2,4-thiadiazol, which is sold under the tradename Terrazole®, by OHP Inc., USA, 2-amino 4-chloro 6-methyl pyrimidine (AM), 2-mercaptobenzothiazole (MBT), or 2-sulfanilamidothiazole (ST), and any combination thereof. In one aspect, a nitrification inhibitor can comprise DMPP, DCD, TU, nitrapyrin, 5-ethoxy-3-trichloromethyl-1,2,4-thiadiazol, AM, MBT, or ST, or a combination thereof. In some embodiments, a fertilizer composition can comprise NBTPT, DMPP, TU, DCD, PPDA, nitrapyrin, 5-ethoxy-3-trichloromethyl-1,2,4-thiadiazol, AM, MBT, ST, or a combination thereof.

In some instances, a binder includes a phosphate, a polyphosphate, a biodegradable polymer, or a wax, or a combination thereof. Suitable waxes include, but are not limited to, vegetable waxes, high melt waxes, ethylene bis(stearamide) wax, paraffin waxes, polyethylene based waxes, and olefin waxes. Suitable phosphates include, but are not limited to, diammonium phosphate, and monoammonium phosphate. Suitable polyphosphates include, but are not limited to, ammonium polyphosphate. Suitable biodegradable polymers include, but are not limited to, polyacrylamide, polyacrylic acid, polyacrylonitrile, biodegradable polylactic acid and other biodegradable polymeric material such as polylactic acid, poly(3-hydroxypropionic acid), polyvinyl alcohol, poly e-caprolactone, poly L-lactide, poly butylene succinate, and biodegradable starch based polymers. The binder can include plaster of Paris, flour, starch, gluten, kaolin, bentonite, colloidal silica, or combinations thereof. Suitable flours include, but are not limited to, rice flour, wheat flour, and bleached wheat flour. Suitable starches include, but are not limited to, dextrin modified starches.

In some instances, the pH buffers include $MgO$, $KH_2PO_4$, $NaHCO_3$, chalk powder, aluminum, magnesium hydroxide, aluminum hydroxide/magnesium hydroxide co-precipitate, aluminum hydroxide/sodium bicarbonate co-precipitate, calcium acetate, calcium bicarbonate, calcium borate, calcium carbonate, calcium bicarbonate, calcium citrate, calcium gluconate, calcium hydroxide, dibasic sodium phosphate, dipotassium hydrogen phosphate, dipotassium phosphate, disodium hydrogen phosphate, magnesium acetate, magnesium borate, magnesium bicarbonate, magnesium carbonate, magnesium hydroxide, magnesium lactate, magnesium oxide, magnesium phosphate, magnesium silicate, magnesium succinate, magnesium tartrate, potassium acetate, potassium carbonate, potassium bicarbonate, potassium borate, potassium citrate, potassium metaphosphate, potassium phthalate, potassium phosphate, potassium polyphosphate, potassium pyrophosphate, potassium succinate, potassium tartrate, sodium acetate, sodium bicarbonate, sodium borate, sodium carbonate, sodium citrate, sodium gluconate, sodium hydrogen phosphate, sodium hydroxide, sodium lactate, sodium phthalate, sodium phosphate, sodium polyphosphate, sodium pyrophosphate, sodium tartrate, sodium tripolyphosphate, synthetic hydrotalcite, tetrapotassium pyrophosphate, tetrasodium pyrophosphate, tripotassium phosphate, trisodium phosphate, and trometamol, and combinations thereof.

The fertilizer described herein can be comprised in a composition useful for application to soil. In some aspects, in addition to the fertilizer described herein, the composition may include other fertilizer compounds, micronutrients, primary nutrients, urea, additional nitrogen nutrients, insecticides, herbicides, or fungicides, or combinations thereof. The fertilizer described herein can also be included in a blended composition comprising other fertilizers. The other fertilizer can be urea, monoammonium phosphate (MAP), diammonium phosphate (DAP), muriate of potash (MOP), monopotassium phosphate (MKP), triple super phosphate (TSP), rock phosphate, single super phosphate (SSP), ammonium sulfate, and the like.

A fertilizer, formed into a fertilizer granule, can have desirable physical properties such as desired levels of abrasion resistance, granule strength, pelletizability, hygroscopicity, granule shape, and size distribution. In some aspects, The fertilizer granule can have a crush strength above 1.5 kgf, such as above 1.8 kgf, such as 2 kgf to 6 kgf, or at least any one of, equal to any one of, or between any two of 2, 2.5, 3, 3.5, 4, 4.5, 5, 5.5, and 6 kgf. Bulk density of the fertilizer granules can be 1 g/cc to 1.2 g/cc, or at least any one of, at most any one of, equal to any one of, or between any two of 1, 1.02, 1.04, 1.06, 1.08, 1.1, 1.12, 1.14, 1.16, 1.18, and 1.2 g/cc. In some aspects, 10 mg or more, such as 10 mg to 40 mg, or at least any one of, at most any one of, equal to any one of, or between any two of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40 mg of the fertilizer can dissolve in 1 ml of water at a pH 7, under stirring at a rate 90 to 110 rpm, and at an ambient temperature, within 5 minutes of adding 100 mg of the fertilizer to the water. In some aspects, the fertilizer is capable of losing less than 0.13 wt. %, such as 0.02 % to 0.12 wt. %, or at most any one of, equal to any one of, or between any two of 0.02, 0.03, 0.04, 0.05, 0.06, 0.07, 0.08, 0.09, 0.1, 0.11, and 0.12 wt. % in an attrition loss test. Attrition loss can be measured using the following attrition loss test.

Attrition loss test: A plurality of sieved fertilizer granules with individual size 2 to 4 mm, and total volume 100 cm$^3$ is weighed (W1) and is placed into the test drum along with the 50 stainless steel balls having a total weight of 100 gm. The drum is closed and rotated for 10 min at 30 rpm. Then, the steel balls are separated from the sample and the material is screened over 2 mm sieve using a sieve shaker. The total weight of the granules over 2 mm are then re-weighed (W2). Results are calculated in terms of % weight loss using the formula:

$$\text{Weight loss due to attrition (wt. \%)} = \frac{\text{weight of sample remained on 2 mm sieve }((W2))}{\text{intial weight of the sample }(W1)} \times 100$$

## II. Method of Capturing Carbon Dioxide and Using Calcium Sulfate

Production of phosphoric acid in industry is realized in some instances by the reaction of calcium phosphate with sulfuric acid, which also produces calcium sulfate in the form of phosphogypsum. More calcium sulfate is produced by weight than the phosphoric acid. Production of phosphogypsum from calcium phosphate and sulfuric acid is described with the following stoichiometric equation:

$$Ca_3(PO_4)_2 + 3\ H_2SO_4 \rightarrow 2\ H_3PO_4 + 3\ CaSO_4$$

Certain aspects herein utilize calcium sulfate, such as phosphogypsum, for production of calcium carbonate ($CaCO_3$), ammonium sulfate (($NH_4)_2SO_4$), and/or potassium sulfate ($K_2SO_4$). In some instances, $CaCO_3$ can be used as a fertilizer or fertilizer component for acid soils. In certain embodiments, $CO_2$ is utilized for production of the calcium carbonate. Therefore certain aspects allows for utilization of both calcium sulfate and $CO_2$ with the simultaneous production of a first product comprising $CaCO_3$, ($NH_4)_2SO_4$), and/or $K_2SO_4$.

The reaction of $CaSO_4$ and $CO_2$, in some embodiments, comprises one step or multiple steps, the reaction of gypsum with the $CO_2$ + a source of ammonia + a source of potassium, such as the non-limiting example reactions (1) and (2)

(1)      $$2CaSO_4.2H_2O + 2CO_2 + 2NH_3 + 2KOH \rightarrow 2CaCO_3 + (NH_4)_2SO_4 + K_2SO_4 + 2H_2O$$

(2)      $$(NH_4)_2SO_4 + NH_2CONH_2 \rightarrow (NH_4)_2SO_4.CO(NH_2)_2$$

In some instances, the reaction of calcium sulfate ($CaSO_4$), carbon dioxide ($CO_2$), a source of ammonia, and a source of potassium comprise two, three, or more reactions that occur in the same reaction vessel or separate vessels. As a non-limiting example, the reaction of calcium sulfate ($CaSO_4$), carbon dioxide ($CO_2$), a source of ammonia, and a source of potassium are three reactions, such as the non-limiting example reactions (3), (4), and (5).

(3)      $$CaSO_4.2H_2O + CO_2 + 2NH_3 \rightarrow CaCO_3 + (NH_4)_2SO_4 + H_2O$$

(4)      $$CaSO_4 + 2KOH \rightarrow Ca(OH)_2 + K_2SO_4$$

(5)      $$Ca(OH)_2 + CO_2 \rightarrow CaCO_3 + H_2O$$

In some instances, separating the calcium carbonate from the ammonium sulfate (($NH_4)_2SO_4$) and/or potassium sulfate ($K_2SO_4$) in an another step provides a second product solution or gel comprising ammonium sulfate ($NH_4)_2SO_4$ and potassium sulfate ($K_2SO_4$). In some instances, contacting the second product solution or gel with urea in another step generates a fertilizer comprising urea ammonium sulfate ($NH_4)_2SO_4.CO(NH_2)_2$ and potassium sulfate ($K_2SO_4$).

In some instances, urea may be added to the ($NH_4)_2SO_4/K_2SO_4$ solution, gel, and/or solid in different forms.

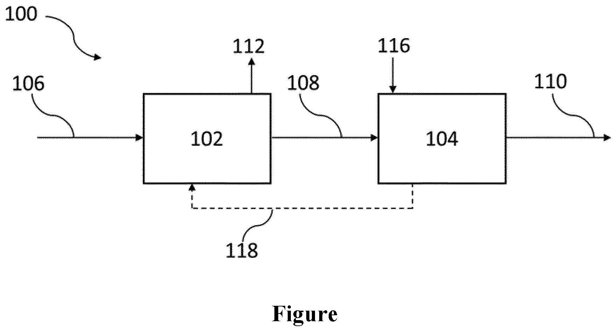

a) Urea can be added to a ($NH_4)_2SO_4/K_2SO_4$ solution in granular form where the outer surface of urea will be impregnated with the ($NH_4)_2SO_4/K_2SO_4$ mixture.
b) Urea can be added to a gel ($NH_4)_2SO_4/K_2SO_4$ mixture where the urea will be coated with the gel.
c) Urea can be added to a gel of ($NH_4)_2SO_4/K_2SO_4$ mixture in the form of melt urea to reduce the cost of solvent evaporation.
d) Urea may be added to the process of $CO_2$ capture as was shown in the Figure, in the form of melt urea to the mixture of CaSO4 and KOH.

The reactions (1) and/or (2) can occur at ambient temperature or any temperature at, between, above, below, or range of -20, -19, -18, -17, -16, -15, -14, -13, -12, -11, -10, -9, -8, -7, -6, -5, -4, -3, -2, -1, 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, or 150°C. In some instances reaction (1) and/or reaction (2) occurs at approximately 30°C to 70°C. The reactions (1) and/or (2) can be reacted in a continuous reaction or as a batch. The reactions (1) and/or (2) can be reacted for at, between, above, below, or range of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59 minutes, and/or 1, 2, 3, 4, 5, 6, 7, 8, 9, 10, 11, 12, 13, 14, 15, 16, 17, 18, 19, 20, 21, 22, 23 hours, and/or 1, 2, 3, 4, 5, 6, 7, 8, 9, 10, 11, 12, 13, 14 days. The feeds, reactants, products, etc. can be transported or moved into, out of, and/or through the system at a rate of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600, 610, 620, 630, 640, 650, 660, 670, 680, 690, 700, 710, 720, 730, 740, 750, 760, 770, 780, 790, 800, 810, 820, 830, 840, 850, 860, 870, 880, 890, 900, 910, 920, 930, 940, 950, 960, 970, 980, 990, or 1000 g/minute, kg/minute, tons/minute. The feeds, reactants, products, etc. can be provided, obtained, and/or transported at a pressure of 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, and/or 50 bar.

In a further step the method includes recycling a portion of the urea ammonium sulfate and/or potassium sulfate back to a container wherein the contacting occurs between calcium sulfate ($CaSO_4$) and urea ($CO(NH_2)_2$) with carbon dioxide ($CO_2$), a source of potassium, and a source of ammonia.

The source of ammonia, can in some instances be one or more of a solution of ammonium hydroxide, ammonium, ammonium carbonate, ammonia gas, succinimide, and/or phthalimide. The source of potassium, can in some instances be one or more of potassium hydroxide (KOH), potassium chloride (KCl), potassium carbonate ($K_2CO_3$), potassium phosphate ($K_3PO_4$), and/or potassium nitrate ($KNO_3$). The source of nitrogen, can in some instances be urea solution, molten urea, granular urea, and/or prilled urea. The products of the reaction of calcium sulfate ($CaSO_4$), carbon dioxide ($CO_2$), a source of ammonia, a source of nitrogen, and a source of potassium can in some instances also produce water, calcium sulfate ($CaSO_4$), ammonia ($NH_3$), ammonium hydroxide ($NH_4OH$), potassium hydroxide (KOH), urea ($CO(NH_2)_2$), ammonium sulfate ($(NH_4)_2SO_4$), and/or calcium carbonate ($CaCO_3$).

Referring to the Figure, the disclosed embodiment scheme demonstrats simultaneous utilization of $CO_2$ and $CaSO_4$ producing useful products such as- urea ammonium sulfate $(NH_4)_2SO_4.CO(NH_2)_2$, $K_2SO_4$, and/or $CaCO_3$. In some instances, calcium carbonate can be removed during the process, and can be used as a starting material for other products, including a fertilizer, and/or blended with other compositions, including those to generate a fertilizer. The system 100 can include a first reactor 102 and a second reactor 104. The feed mixture ingredients 106, which can include calcium sulfate ($CaSO_4$), carbon dioxide ($CO_2$), a source of potassium, a source of urea (optional), and a source of ammonia, can be added in combination or separately to the first reactor 102. All or a portion of feed mixture 106 can be reacted in the first reactor 102 to generate a reaction product, which can comprise ammonium sulfate ($NH_4)_2SO_4$, potassium sulfate ($K_2SO_4$), and calcium carbonate ($CaCO_3$),. The calcium carbonate 112 can be separated in some instances from the potassium sulfate and ammonium sulfate. In some instances, the separation occurs in a separator (not shown). Mixture 108 can comprise the reaction product that has optionally at least partially been purified by removal of at least some of the calcium carbonate. Mixture 108 can be delivered to the second reactor 104. In some instances, urea 116 may be added to the mixture of potassium sulfate and ammonium sulfate after filtration of $CaCO_3$. All or a portion of 116 can be reacted in the second reactor 104 to generate a second reaction product 110, which can comprise urea ammonium sulfate and potassium sulfate. In some instances, the system is capable of recycling a portion of the urea ammonium sulfate and potassium sulfate 118 back to the first reactor 102. In some instances, the feed mixture 106 does not include a urea source, which yields a first reaction product comprising ammonium sulfate ($NH_4)_2SO_4$, potassium sulfate ($K_2SO_4$), and calcium carbonate ($CaCO_3$). In some instances, the calcium carbonate is separated from the potassium sulfate and the ammonium sulfate. In some instances, the calcium carbonate, ammonium sulfate, and potassium sulfate are not separate. In some instances the separation occurs in a separator, such as a second separator (not shown). Mixture 118 can comprise the second reaction product 110 or ammonium sulfate and potassium sulfate that has been at least partially purified by removing at least a portion of the calcium carbonate. In some instances, all or a portion of the urea 116 can be combined with the feed mixture 106 (not shown). In some instances, all or a portion of the feed 106 can be combined with urea 116 (not shown). When urea is included in the first reactor, in some instances, the mixture 118 can include urea ammonium sulfate. All or a portion of the second reaction product 110 can be removed from the system. All or a portion of the calcium carbonate 112 can be removed from the system. In some instances, the second reaction product 110 can further comprise water, calcium sulfate ($CaSO_4$), ammonia ($NH_3$), ammonium hydroxide ($NH_4OH$), potassium hydroxide (KOH), urea ($CO(NH_2)_2$), ammonium sulfate ($(NH_4)_2SO_4$), and/or calcium carbonate ($CaCO_3$).

In some instances, the disclosed embodiment scheme does not include the production of phosphoric acid by reacting sulfuric acid and calcium phosphate. In some instances, the disclosed embodiment scheme does not include production of phosphogypsum or gypsum.

## III. Methods of Using the Fertilizer

The fertilizer, including fertilizer granules, compositions containing the fertilizer, and fertilizer blends containing the fertilizer of the present disclosure can be used in methods of increasing the amount of one or more plant nutrients in soil and of enhancing plant growth. Such methods can include applying to the soil an effective amount of a composition and/or blend containing the fertilizer of the present invention. The method may include increasing the growth and yield of crops, trees, ornamentals, etc., such as, for example, palm, coconut, rice, wheat, corn, barley, oats, and/or soybeans. The method can include applying the fertilizer blend of the present invention to at least one of a soil, an organism, a liquid carrier, a liquid solvent, etc. The composition(s) and/or fertilizer blends(s) containing the fertilizer can be applied to plants and/or soil as a top dressing fertilizer, basal fertilizer, and/or through any suitable method of application.

Non-limiting examples of plants that can benefit from the fertilizer of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes.

In some instances, especially when produced on-site and near end-use sites, the filtrate of urea- ammonium sulfate- potassium sulfate can be used directly as a liquid fertilizers for direct field applications in foliar spray or drip irrigation methods.

The effectiveness of compositions comprising the fertilizer of the present invention can be ascertained by measuring the amount of calcium and optionally other nutrients in the soil at various times after applying the fertilizer composition to the soil. It is understood that different soils have different characteristics, which can affect the stability of the nutrients in the soil. The effectiveness of a fertilizer composition can also be directly compared to other fertilizer compositions by doing a side-by-side comparison in the same soil under the same conditions.

## Examples

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

## Example 1

528 g $(NH_4)_2SO_4$ and 174 g $K_2SO_4$ were dissolved in 600 ml of water. The mixture was stirred for 30 minutes at 40°C. 100 g $CaCO_3$ was added to the resulting solution. This mixture was stirred for an hour at 300 rpm. 89 g urea was added to the solution. The temperature of the mixture was increased to 65°C and the stirring was continued at this temperature until the mixture produced a gel phase product. The gel was then pushed through a funnel to produce granules with a size of 3-4 mm. The granules were then dried at 60°C for 24 hours. The final solid product contained urea ammonium sulfate $(NH_4)_2SO_4.CO(NH_2)_2$, potassium sulfate $(K_2SO_4)$, and calcium carbonate $(CaCO_3)$, with a nutrient content of 15.84% nitrogen (N), 15.0% sulfur (S), 7.6% potassium (K) [9.2% potassium $(K_2O)$] and 6.0 % calcium (Ca). When the fertilizer was not dried, the liquid fertilizer product contained a nutrient content of 14.3% nitrogen (N), 13.5% sulfur (S), 6.9% potassium (K) [8.3% potassium $(K_2O)$], and 5.4% calcium (Ca).

## Example 2

Example 2 was carried out as described in Example 1, but without the addition of $CaCO_3$. The final solid product contained urea ammonium sulfate $(NH_4)_2SO_4.CO(NH_2)_2$ and potassium sulfate $(K_2SO_4)$ with a nutrient content of 19.3% nitrogen (N), 19.6% sulfur (S), and 11.8% potassium (K) [14.2% potassium $(K_2O)$].

## Example 3

Prophetic Example

$CaSO_4$, KOH, $NH_4OH$, and urea can be loaded into a Parr reactor to react with $CO_2$ gases introduced with 25 cc/min flow at 5 bar through the Parr reactor. The reactor can be heated to 60°C inside of the reactor and a reaction can continue for 5 hours. The reactor can be cooled to room temperature. The reaction can form a product in suspension form. The suspension can be dried to form a product containing urea ammonium sulfate $((NH_4)_2SO_4.CO(NH_2)_2)$, potassium sulfate $(K_2SO_4)$, and calcium carbonate $(CaCO_3)$. In some instances, the suspension can further contain water, calcium sulfate $(CaSO_4)$, ammonia $(NH_3)$, ammonium hydroxide $(NH_4OH)$, potassium hydroxide (KOH), urea $(CO(NH_2)_2)$, and/or ammonium sulfate $((NH_4)_2SO_4)$. In some instances, the $CaCO_3$ is separated to form a product containing $(NH_4)_2SO_4.CO(NH_2)_2$ and $K_2SO_4$. In some instances, a product containing $(NH_4)_2SO_4$ and $K_2SO_4$ can be treated separately with urea to generate a fertilizer product comprising urea ammonium sulfate $((NH_4)_2SO_4.CO(NH_2)_2)$ and potassium sulfate $(K_2SO_4)$.

All of the methods disclosed and claimed herein can be made and executed without undue experimentation in light of the present disclosure. While the compositions and methods of this invention have been described in terms of preferred embodiments, it will be apparent to those of skill in the art that variations may be applied to the methods and in the steps or in the sequence of steps of the method described herein without departing from the concept, spirit and scope of the invention. More specifically, it will be apparent that certain agents which are both chemically and physiologically related may be substituted for the agents described herein while the same or similar results would be achieved. All such similar substitutes and modifications apparent to those skilled in the art are deemed to be within the spirit, scope and concept of the invention as defined by the appended claims.

**Claims**

1. A method of capturing $CO_2$ and using calcium sulfate ($CaSO_4$) to prepare a nitrogen (N), potassium (K), sulfur (S) fertilizer comprising urea ammonium sulfate $(NH_4)_2SO_4.CO(NH_2)_2$ and potassium sulfate ($K_2SO_4$), the method comprising producing calcium carbonate ($CaCO_3$), ammonium sulfate $((NH_4)_2SO_4)$, and potassium sulfate ($K_2SO_4$) by contacting calcium sulfate ($CaSO_4$) with carbon dioxide ($CO_2$), a source of potassium, and a source of ammonia, and producing urea ammonium sulfate $(NH_4)_2SO_4.CO(NH_2)_2$ by contacting the ammonium sulfate $((NH_4)_2SO_4)$ with urea.

2. The method of claim 1, comprising the steps of:

   (a) contacting calcium sulfate ($CaSO_4$) with carbon dioxide ($CO_2$), a source of potassium, and a source of ammonia, to generate a first product comprising calcium carbonate ($CaCO_3$), ammonium sulfate $((NH_4)_2SO_4)$, and potassium sulfate ($K_2SO_4$);
   (b) separating the calcium carbonate ($CaCO_3$) from the first product to generate a second product comprising a solution or gel comprising ammonium sulfate $((NH_4)_2SO_4)$, and potassium sulfate ($K_2SO_4$); and
   (c) contacting the second product solution or gel with urea to generate the fertilizer comprising urea ammonium sulfate $(NH_4)_2SO_4.CO(NH_2)_2$ and potassium sulfate ($K_2SO_4$).

3. The method of claim 1 comprising contacting calcium sulfate ($CaSO_4$) and urea ($CO(NH_2)_2$) with carbon dioxide ($CO_2$), a source of potassium, and a source of ammonia to generate calcium carbonate ($CaCO_3$), potassium sulfate ($K_2SO_4$), and urea ammonium sulfate $(NH_4)_2SO_4.CO(NH_2)_2$.

4. The method of claim 3, further comprising separating $CaCO_3$ from the potassium sulfate ($K_2SO_4$) and urea ammonium sulfate $(NH_4)_2SO_4.CO(NH_2)_2$ and optionally drying the separated $CaCO_3$.

5. The method of any one of claims 1 to 4, comprising recycling a portion of the urea ammonium sulfate and potassium sulfate back to a container wherein occurs the contacting calcium sulfate ($CaSO_4$) and urea ($CO(NH_2)_2$) with carbon dioxide ($CO_2$), a source of potassium, and a source of ammonia.

6. The method of any one of claims 1 to 5, wherein:

   the $CaSO_4$ is waste gypsum and/or recycled gypsum, preferably wherein the $CaSO_4$ is phosphogypsum and/or red gypsum;
   the source of ammonia is one or both of ammonia ($NH_3$) and ammonium hydroxide ($NH_4OH$);
   the source of $CO_2$ comprises waste gas from an industrial plant and/or flue gas;
   the source of potassium comprises potassium hydroxide (KOH), potassium chloride (KCl), potassium carbonate ($K_2CO_3$), potassium phosphate ($K_3PO_4$), and/or potassium nitrate ($KNO_3$): and/or
   the source of urea comprises urea solution, molten urea, and/or granular/prilled urea.

7. The method of any one of claims 1 to 6, wherein the fertilizer further comprises water, calcium sulfate ($CaSO_4$), ammonia ($NH_3$), ammonium hydroxide ($NH_4OH$), potassium hydroxide (KOH), urea ($CO(NH_2)_2$), ammonium sulfate $((NH_4)_2SO_4)$, and/or calcium carbonate ($CaCO_3$).

8. The method of any one of claims 1 to 7, wherein:

   contacting calcium sulfate ($CaSO_4$) with carbon dioxide ($CO_2$), a source of potassium, and a source of ammonia occurs at approximately 30°C to 65°C;
   wherein contacting the ammonium sulfate $((NH_4)_2SO_4)$ with urea or the second product solution or gel with urea occurs at approximately 30°C to 65°C; and/or
   wherein contacting calcium sulfate ($CaSO_4$) and urea ($CO(NH_2)_2$) with carbon dioxide ($CO_2$), a source of

potassium, and a source of ammonia occurs at approximately 30°C to 65°C.

9. A system for capturing $CO_2$ and using calcium sulfate $(CaSO_4)$ to prepare a nitrogen (N), potassium (K), sulfur (S) fertilizer comprising urea ammonium sulfate $(NH_4)_2SO_4.CO(NH_2)_2$ and potassium sulfate $(K_2SO_4)$, the system comprising one or a combination of reactor(s) capable of receiving one or more of calcium sulfate $(CaSO_4)$, urea $(CO(NH_2)_2)$, $CO_2$, a source of potassium, and one or both of ammonia $(NH_3)$ and ammonium hydroxide $(NH_4OH)$, wherein the one or combination of reactor(s) are capable of providing conditions to generate a product comprising calcium carbonate $(CaCO_3)$, potassium sulfate $(K_2SO_4)$, and urea ammonium sulfate $(NH_4)_2SO_4.CO(NH_2)_2$.

10. The system of claim 9, further comprising an apparatus capable of separating $CaCO_3$ from the product generated in the one or a combination of reactor(s).

11. The system of any one of claims 9 to 10, wherein:

the one or a combination of reactor(s) is capable of receiving and reacting $CO_2$ from a flue gas and/or a waste gas from an industrial plant and/or
the one or a combination of reactor(s) is capable of receiving and reacting $CO_2$ from a flue gas and/or a waste gas from an industrial plant, wherein the $CO_2$ from the flue gas and/or waste gas is not purified to separate or concentrate the $CO_2$ in the flue gas and/or waste gas before reacting to form the calcium carbonate $(CaCO_3)$.

12. A fertilizer product comprising urea ammonium sulfate $(NH_4)_2SO_4.CO(NH_2)_2$ and potassium sulfate $(K_2SO_4)$.

13. The fertilizer product of claim 12, further comprising one or more of water, calcium sulfate $(CaSO_4)$, ammonia $(NH_3)$, ammonium hydroxide $(NH_4OH)$, potassium hydroxide (KOH), urea $(CO(NH_2)_2)$, ammonium sulfate $((NH_4)_2SO_4)$ and/or calcium carbonate $(CaCO_3)$.

14. The fertilizer product of claim 12, wherein the urea ammonium sulfate $(NH_4)_2SO_4.CO(NH_2)_2$ encapsulates at least a portion of the potassium sulfate $(K_2SO_4)$.

15. A method of fertilizing, the method comprising contacting a soil, a plant or a soil and plant with the fertilizer of any one of claims 12 to 14 or produced by the method of any one of claims 1 to 8.

**Amended claims in accordance with Rule 137(2) EPC.**

1. A method of capturing $CO_2$ and using calcium sulfate $(CaSO_4)$ to prepare a nitrogen (N), potassium (K), sulfur (S) fertilizer comprising urea ammonium sulfate $(NH_4)_2SO_4.CO(NH_2)_2$ and potassium sulfate $(K_2SO_4)$, the method comprising producing calcium carbonate $(CaCO_3)$, ammonium sulfate $((NH_4)_2SO_4)$, and potassium sulfate $(K_2SO_4)$ by contacting calcium sulfate $(CaSO_4)$ with carbon dioxide $(CO_2)$, a source of potassium, and a source of ammonia, and producing urea ammonium sulfate $(NH_4)_2SO_4.CO(NH_2)_2$ by contacting the ammonium sulfate $((NH_4)_2SO_4)$ with urea.

2. The method of claim 1, comprising the steps of:

(a) contacting calcium sulfate $(CaSO_4)$ with carbon dioxide $(CO_2)$, a source of potassium, and a source of ammonia, to generate a first product comprising calcium carbonate $(CaCO_3)$, ammonium sulfate $((NH_4)_2SO_4)$, and potassium sulfate $(K_2SO_4)$;
(b) separating the calcium carbonate $(CaCO_3)$ from the first product to generate a second product comprising a solution or gel comprising ammonium sulfate $((NH_4)_2SO_4)$, and potassium sulfate $(K_2SO_4)$; and
(c) contacting the second product solution or gel with urea to generate the fertilizer comprising urea ammonium sulfate $(NH_4)_2SO_4.CO(NH_2)_2$ and potassium sulfate $(K_2SO_4)$.

3. The method of claim 1 comprising contacting calcium sulfate $(CaSO_4)$ and urea $(CO(NH_2)_2)$ with carbon dioxide $(CO_2)$, a source of potassium, and a source of ammonia to generate calcium carbonate $(CaCO_3)$, potassium sulfate $(K_2SO_4)$, and urea ammonium sulfate $(NH_4)_2SO_4.CO(NH_2)_2$.

4. The method of claim 3, further comprising separating $CaCO_3$ from the potassium sulfate $(K_2SO_4)$ and urea ammonium sulfate $(NH_4)_2SO_4.CO(NH_2)_2$ and optionally drying the separated $CaCO_3$.

5. The method of any one of claims 1 to 4, comprising recycling a portion of the urea ammonium sulfate and potassium sulfate back to a container wherein occurs the contacting calcium sulfate ($CaSO_4$) and urea ($CO(NH_2)_2$) with carbon dioxide ($CO_2$), a source of potassium, and a source of ammonia.

6. The method of any one of claims 1 to 5, wherein:

the $CaSO_4$ is waste gypsum and/or recycled gypsum, preferably wherein the $CaSO_4$ is phosphogypsum and/or red gypsum;
the source of ammonia is one or both of ammonia ($NH_3$) and ammonium hydroxide ($NH_4OH$);
the source of $CO_2$ comprises waste gas from an industrial plant and/or flue gas;
the source of potassium comprises potassium hydroxide (KOH), potassium chloride (KCl), potassium carbonate ($K_2CO_3$), potassium phosphate ($K_3PO_4$), and/or potassium nitrate ($KNO_3$): and/or
the source of urea comprises urea solution, molten urea, and/or granular/prilled urea.

7. The method of any one of claims 1 to 6, wherein the fertilizer further comprises water, calcium sulfate ($CaSO_4$), ammonia ($NH_3$), ammonium hydroxide ($NH_4OH$), potassium hydroxide (KOH), urea ($CO(NH_2)_2$), ammonium sulfate (($NH_4)_2SO_4$), and/or calcium carbonate ($CaCO_3$).

8. The method of any one of claims 1 to 7, wherein:

contacting calcium sulfate ($CaSO_4$) with carbon dioxide ($CO_2$), a source of potassium, and a source of ammonia occurs at approximately 30°C to 65°C;
wherein contacting the ammonium sulfate (($NH_4)_2SO_4$) with urea or the second product solution or gel with urea occurs at approximately 30°C to 65°C; and/or
wherein contacting calcium sulfate ($CaSO_4$) and urea ($CO(NH_2)_2$) with carbon dioxide ($CO_2$), a source of potassium, and a source of ammonia occurs at approximately 30°C to 65°C.

**Figure**

Europäisches
Patentamt

European
Patent Office

Office européen
des brevets

# EUROPEAN SEARCH REPORT

**Application Number**

EP 24 16 1496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 372 576 A1 (YARA INT ASA [NO]) 12 September 2018 (2018-09-12) | 12-15 | INV. C05C3/00 |
| A | * claims 1, 14, 15 * | 1-11 | |
| | ----- | | |
| X | EP 4 299 553 A1 (SABIC GLOBAL TECHNOLOGIES BV [NL]) 3 January 2024 (2024-01-03) | 9-11 | |
| A | * claims 8, 9 * | 1-8, 12-15 | |
| | ----- | | |

**TECHNICAL FIELDS SEARCHED (IPC)**

C05C

The present search report has been drawn up for all claims

| Place of search | Date of completion of the search | Examiner |
|---|---|---|
| The Hague | 15 August 2024 | Kappen, Sascha |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 1496

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2024

| Patent document cited in search report | | Publication date | Patent family member(s) | | Publication date |
|---|---|---|---|---|---|
| EP 3372576 | A1 | 12-09-2018 | BR | 112019018489 A2 | 14-04-2020 |
| | | | CA | 3046875 A1 | 13-09-2018 |
| | | | CO | 2019006144 A2 | 30-08-2019 |
| | | | EP | 3372576 A1 | 12-09-2018 |
| | | | EP | 3592719 A1 | 15-01-2020 |
| | | | SA | 519410013 B1 | 09-03-2023 |
| | | | US | 2021284586 A1 | 16-09-2021 |
| | | | WO | 2018162533 A1 | 13-09-2018 |
| EP 4299553 | A1 | 03-01-2024 | EP | 4299553 A1 | 03-01-2024 |
| | | | WO | 2024003865 A1 | 04-01-2024 |

EPO FORM P0459

For more details about this annex : see Official Journal of the European Patent Office, No. 12/82